# EUROPÄISCHE PATENTSCHRIFT

(11) **EP 3 571 465 B1**
(45) Veröffentlichungstag und Bekanntmachung des Hinweises auf die Patenterteilung: **30.03.2022**
(21) Anmeldenummer: 18704920.0
(22) Anmeldetag: 02.02.2018
(51) Int. Cl.: G01B 11/25

(54) **VORRICHTUNG UND VERFAHREN ZUR KALIBRIERUNG EINES MESSGERÄTES MITTELS PROJIZIERTER MUSTER**
DEVICE AND METHOD FOR CALIBRATING A MEASURING APPARATUS BY MEANS OF PROJECTED PATTERNS
DISPOSITIF ET PROCÉDÉ D'ÉTALONNAGE D'UN APPAREIL DE MESURE AU MOYEN DE MOTIFS PROJETÉS

(30) Priorität: 20.02.2017 DE 102017202652
(43) Veröffentlichungstag der Anmeldung: 27.11.2019
(73) Patentinhaber: Siemens Aktiengesellschaft, 80333 München (DE)
(72) Erfinder: ENGEL, Thomas, 73432 Aalen (DE); WISSMANN, Patrick, 81677 München (DE)
(86) Internationale Anmeldenummer: PCT/EP2018/052597
(87) Internationale Veröffentlichungsnummer: WO 2018/149659

(56) Entgegenhaltungen:
- EP-A2- 1 329 760
- DE-A1- 4 130 237
- US-A- 5 557 410
- US-A- 5 636 025
- US-A1- 2004 105 100
- US-A1- 2014 368 832
- US-A1- 2015 350 617
- US-A1- 2015 350 618
- TAKAYUKI OKATANI ET AL: "Autocalibration of a projector-camera system", IEEE TRANSACTIONS ON PATTERN ANALYSIS AND MACHINE INTELLIGENCE, IEEE COMPUTER SOCIETY, USA, Bd. 27, Nr. 12, 1. Dezember 2005 (2005-12-01), Seiten 1845-1855, XP001512619, ISSN: 0162-8828, DOI: 10.1109/TPAMI.2005.235

## Beschreibung

Bei großen Bauteilen werden günstigerweise Messsysteme eingesetzt, die einen großen Erfassungsbereich haben. So beispielsweise bei einem sogenannten "Lavona Scanner" der einen Erfassungsbereich von 2 * 2,5 m² hat. Damit die notwendige Kalibrierung schnell erfolgen kann, ist es günstig ein Kalibriertarget zu haben, das möglichst die Größe des gesamten Messbereichs hat. Da für eine Vernetzung der Messungen in unterschiedlichen Tiefen des Messbereichs ebenso mit schräggestellten Target gemessen wird, sollte das Target idealerweise im Faktor 1/Cos(des Kippwinkels gegen die Normale) größer sein. In dem Beispiel wären es dann ca. 2,5 * 3 m².

Derartig große Kalibriertargets sind schwer herzustellen, insbesondere mit der passenden Genauigkeit und damit sehr teuer. Ferner sind diese allein in Folge deren Größe schon in deren Handhabung schwierig. Da sie für eine geforderte Stabilität und Maßtreue im Bereich von 10 µm recht stabil ausgeführt sein müssen, sind diese ebenso entsprechend schwer.

Herkömmlicherweise wird das Problem dadurch gelöst, dass man kleinere Targets verwendet und diese im Messbereich so verschiebt, dass diese für eine Ebene dann beispielsweise an neun Positionen gebracht werden müssen. Dies ist sehr zeitund arbeitsaufwendig und folglich dauert eine Kalibrierung recht lange. In der Kalibrierdauer können sich dann ebenso beispielsweise die Umweltbedingungen stark ändern, was dann die mit der Kalibrierung erzielbare Genauigkeit deutlich beeinträchtigen kann. Beispiele hierfür wären eine geänderte Sonneneinstrahlung in den Messbereich, was sowohl die Temperatur als auch die Kontrastverhältnisse bei der Aufnahme der Kalibrierbilder beeinflussen kann.

Wenn man also in fünf Ebenen mit drei Kippwinkeln pro Ebene messen möchte, ergeben sich 15 Messungen. Wenn man lediglich neun Messungen pro Ebene benötigt, werden dann bereits 9 * 15 = 135 Messungen erforderlich.

Bei der Kalibrierung braucht es ebenso eine Maßverkörperung für die Kamera, da die optische Erfassung mit der Kamera lediglich die Winkelgröße des Objektes erfasst. Es braucht dann mindestens eine Maßverkörperung, um aus Winkelgröße und Abstand dann ebenso laterale Dimensionen messen zu können. Kalibrierplatten werden meist selber ebenso kalibriert, sodass die einzelnen Strukturen auf der Kalibrierplatte in Größe und/oder Lage bekannt sind.

Die Offenbarung "Autocalibration of a Projector-Camera system" von Takayuki Okatani et al., IEEE transactions on pattern analysis and machine intelligence, VOL. 27, NO: 12, Dezember 2005, offenbart ein Projektionskamerasystem, welches Projektoren und Kameras aufweist. Dabei projizieren die Projektoren Bilder auf eine ebene Oberfläche, während die Kameras die Bilder aufnehmen.

Des Weiteren offenbart die US 5 557 410 A ein Verfahren zum Kalibrieren eines dreidimensionalen optischen Messsystems. Der US 2015/350618 A1 ist ein Verfahren zum Projizieren von digitalen Informationen auf ein wirkliches Objekts in einer wirklichen Umgebung als bekannt zu entnehmen. Des Weiteren ist aus der US 5 636 025 A ein System zum Messen eines Versatzes von Punkten auf einer kontorierten Oberfläche relativ zu einer bekannten Ebene bekannt. Des Weiteren offenbart die US 2004/105100 A1 ein Gerät zum Projizieren von Rändern auf einer Oberfläche eines Objekts.

Es ist Aufgabe bei einer Vermessung eines großen Bauteils mittels Messsystemen mit einem entsprechend großen Erfassungsbereich, eine Kalibrierung einfach auszuführen. Es sollen aufwändige Kalibriertargets, wie es beispielsweise Kalibriertafeln und Kalibriermarken sind, vermieden werden. Ein Maßstab oder Maßverkörperungen sollen vereinfacht bereitgestellt werden.

Kalibrierung (in Anlehnung an das englische Wort "calibration" auch Kalibration) in der Messtechnik ist ein Messprozess zur zuverlässig reproduzierbaren Feststellung und Dokumentation der Abweichung eines Messgerätes oder einer Maßverkörperung gegenüber einem anderen Gerät oder einer anderen Maßverkörperung, die in diesem Fall als Normal bezeichnet werden. In einer weiteren Definition kann zur Kalibrierung ein zweiter Schritt gehören, nämlich die Berücksichtigung der ermittelten Abweichung bei der anschließenden Benutzung des Messgerätes zur Korrektur der abgelesenen Werte.

Die Aufgabe wird durch eine Vorrichtung gemäß dem Hauptanspruch und einem Verfahren gemäß dem Nebenanspruch gelöst.

Gemäß einem ersten Aspekt wird eine Vorrichtung zur Kalibrierung eines Messgerätes zur Vermessung eines Messobjektes, das sich entlang eines Bereiches in Metern im Raum erstreckt, vorgeschlagen, mit einem das Messobjekt erfassenden Erfassungsbereich, wobei mittels eines Lichtprojektors verschiedene Kalibriermuster in den Erfassungsbereich des Messgerätes auf eine ebene Wand oder ebene Fläche projiziert werden.

Gemäß einem zweiten Aspekt wird ein Verfahren zur Kalibrierung eines Messgerätes zur Vermessung eines Messobjektes, das sich entlang eines Bereiches in Metern im Raum erstreckt, mit einem das gesamte Messobjekt erfassenden Erfassungsbereich, wobei mittels eines Lichtprojektors verschiedene Kalibriermuster in den Erfassungsbereich des Messgerätes auf eine ebene Wand oder ebene Fläche projiziert werden.

Erfindungsgemäß wird vorgeschlagen, kein fixes bzw. starres Kalibriertarget zu verwenden, sondern die Kalibriermarken auf eine Wand zu projizieren, die möglichst eben ist bzw. möglichst frei von Störungen, wie es beispielsweise Türen oder Durchgänge oder Fugen oder Nähte sein können.

Es wird ein optischer Projektor vorgeschlagen, der die Marken auf eine möglichst ebene Fläche projiziert, wobei vorausgesetzt wird, dass diese Fläche nicht die Ebenheitsanforderungen der bisher benutzten Kalibriertargets erfüllt, sondern eher bautypisch im Bereich von einigen mm bis cm liegen dürfte. Die zur Kalibrierung genutzte Fläche kann also in guter bis sehr guter Näherung als eben angesehen werden.

Die aus der Ebenheitsabweichung entstehenden Fehler in der Massverkörperung und damit für die Kalibrierung sind in der Messtechnik sogenannte Kosinus-Fehler oder Fehler zweiter Ordnung, Stufen in der Oberfläche machen da mehr Störungen, die je nach Lage zur Kamera zu Fehlern zweiter Ordnung und in besonderen Fällen ebenso zu Fehlern erster Ordnung führen können.

Zum Kalibrieren ist es wichtig, dass der Messaufbau unterschiedliche Kalibriermuster aufnimmt. Das kann erreicht werden, wenn der Kalibrierprojektor und/oder Messaufbau relativ zu der Wand verfahren werden kann. Es erfolgt eine Projektion eines Kalibriermusters auf eine näherungsweise ebene Fläche.

Mittels eines Polarisators oder eines Strahlenteilers werden zwei mit einem eine Maßverkörperung bereitstellenden Strahlversatz zueinander lateral räumlich verschobene Kalibriermuster erzeugt.

Der Strahl kann aufgrund der Polarisation aufgespalten werden und die aufgespaltenen Teile können gegeneinander räumlich versetzt werden. Technisch entspricht das der Erzeugung von neuen Lichtquellen, die aufgrund der unterschiedlichen Polarisation zueinander inkohärent sind.

Die Muster können frei in den Raum propagieren oder über eine Optik in den zu vermessenden Bereich bzw. auf die Wand abgebildet werden.

Die Projektion der Kalibriermarken bzw. Muster kann mit kohärenten oder inkohärenten Lichtquellen erfolgen.

Um ein Maßstab für die Kalibrierung der lateralen Dimensionen zu bekommen, kann ein Maßstab auf die Wandebene markiert werden oder vor der Wand aufgestellt werden. Dabei wird das optische Muster aus dem Musterprojektor in einem Strahlteiler geteilt und dann mit einer lateralen Verschiebung quasi doppelt projiziert. So kann jedes Element des Musters ein entsprechendes Element des verschobenen Musters haben. Über die gesamte Wand, auf die das Kalibriermuster projiziert wird, gibt es dann diesen Abstand zur Kalibrierung der lateralen Dimensionen. Durch die rein laterale Verschiebung bleibt der Abstand über die gesamte Projektionstiefe erhalten. Damit transportiert die Verdoppelung des Musters über diesen Basisabstand eine laterale Dimension. Außerdem umfasst die Vorrichtung eine Rechnereinrichtung.

Weitere vorteilhafte Ausgestaltungen werden in den Unteransprüchen beansprucht.

Gemäß einer weiteren vorteilhaften Ausgestaltung kann der Lichtprojektor eine Lichtquelle, insbesondere einen Laser, eine Kollimationsoptik und ein Mustergenerator, der insbesondere als eine Musterplatte ausgeführt ist, aufweisen.

Gemäß einer weiteren vorteilhaften Ausgestaltung kann die Musterplatte als eine Transmissionsstruktur, als refraktive, diffraktive oder reflektierende Struktur oder als ein Computer generiertes Hologramm ausgebildet sein. Die Musterplatte kann als Dia, also als Transmissionsstruktur mit binärem Muster oder Muster mit unterschiedlichen Helligkeitsstufen ausgeführt sein. Alternativ kann das Muster als refraktive oder diffraktive Struktur, als diffraktives optisches Element oder als Computer generiertes Hologramm ausgeführt sein. Alternativ kann die Musterplatte ebenso reflektierend ausgeführt sein, beispielsweise als strukturierter Spiegel, als verspiegeltes diffraktives optisches Element oder als Computer generiertes Hologramm.

Gemäß einer weiteren vorteilhaften Ausgestaltung kann der Lichtprojektor eine kohärente oder teilkohärente Lichtquelle aufweisen, wobei zwischen Mustergenerator und einer im Strahlengang nach der Lichtquelle angeordneten Kollimationsoptik ein Kohärenzminderer, insbesondere eine speckle Unterdrückung, positioniert sein kann. Die Musterplatte wird von einer Beleuchtungseinheit beleuchtet. Im Falle von teilkohärenten oder kohärenten Lichtquellen kann ebenso ein Kohärenzminderer vorgesehen sein. Dieser kann beispielsweise aus doppelbrechenden planparallelen Platten bestehen, die in den kollimierten Strahl eingebracht werden. Damit erfolgt eine Kohärenzminderung bei kohärenten oder teilkohärenten Lichtquellen, um eine Abbildungsgüte zu verbessern.

Gemäß einer weiteren vorteilhaften Ausgestaltung kann eine Mehrzahl von Platten im Strahlengang hintereinander angeordnet sein, wobei Hauptachsen einer jeweiligen Platte zu den Hauptachsen der vorangehenden Platte um einen Winkel, insbesondere um 45 Grad, verdreht sein kann. Man kann von einer Kaskadierung sprechen. So entstehen für jeden Strahl zwei weitere Strahlen, die dann allerdings wieder teilweise zueinander kohärent sind, solange die zeitliche Kohärenz der Lichtquelle größer ist als der zeitliche Versatz der Wellenfronten aufgrund der Verzögerung durch die Doppelbrechung bzw. der laterale Versatz kleiner ist, als die räumliche Kohärenz der Lichtquelle. Nach n Platten ergibt sich dann eine Überlagerung von 2ⁿ-Strahlen, was den Kontrast von Kohärenzeffekten bei kohärenten und teilkohärenten Lichtbündeln mindert.

Gemäß einer weiteren vorteilhaften Ausgestaltung kann ein jeweiliges Kalibriermuster geometrische Formen, insbesondere Punkte, Kreise, Kreuze, Quadrate oder Linienstücke aufweisen. Die Musterplatte erzeugt dabei das für die Kalibrierung gewünschte Muster, das aus Linien, Gittern, Punkten, Kreisen, Kreuzen, Quadraten oder anderen geometrischen Formen bestehen kann. Diese Formen können regelmäßig angeordnet sein.

Ein Kohärenzminderer ist vorteilhafterweise zwischen Kollimationsoptik und Musterplatte angeordnet.

Gemäß einer weiteren vorteilhaften Ausgestaltung können die geometrischen Formen ortscodiert sein. Es ist von Vorteil, wenn das projizierte Muster Strukturen enthält, die eine eindeutige Lokalisierung und Orientierung des Musters im Erfassungsbereich des Messgerätes ermöglichen. So kann dann eindeutig die Lage des Musters relativ zum Erfassungsbereich des Messgerätes, das beispielsweise eine Kamera sein kann, bestimmt werden.

Gemäß einer weiteren vorteilhaften Ausgestaltung können die geometrischen Formen eine vorbestimmte Winkelgröße aufweisen. Die in den Raum projizierten Muster des Musterprojektors werden ebenso als Winkelobjekte projiziert, also als Objekte, die eine vorbestimmte Winkelgröße haben. Ein Musterprojektor zur Erzeugung des Kalibrierobjektes wird als Winkelobjekt aufgefasst.

Gemäß einer weiteren vorteilhaften Ausgestaltung kann mittels einer Rechnereinrichtung ein Winkelfehler zwischen zueinander verschobenen Teilen mittels Triangulation bei der Kalibrierung berücksichtig werden. Ergibt sich bei der Strahlaufspaltung ein Winkelfehler zwischen den aufgespaltenen Teilen, so kann dieser bestimmt und bei der Kalibrierung berücksichtigt werden, da man aus der Triangulation mit dem Basisabstand und zweier Winkel von Strukturen, die sich auf der Wand, beispielsweise überlagern, dann der lokale Abstand der Wand bestimmt werden kann.

Gemäß einer weiteren vorteilhaften Ausgestaltung kann die gesamte Vorrichtung oder können Bestandteile der Vorrichtung und der Erfassungsbereich des Messgerätes oder die ebene Wand oder ebene Fläche relativ zueinander verfahrbar sein. D. h. der Kalibrierprojektor und/oder der Messaufbau kann relativ zu der Wand verfahren werden. Es sind folgende unterschiedliche Kalibrierszenarien möglich:
1. Der Kalibrierprojektor ortsfest zur ebenen Fläche, wobei der Messaufbau verschoben wird.
2. Der Kalibrierprojektor und der Messaufbau werden gemeinsam relativ zur ebenen Fläche verschoben.
3. Der Kalibrierprojektor und der Messaufbau werden unabhängig relativ zur ebenen Fläche verschoben.

Gemäß einer weiteren vorteilhaften Ausgestaltung kann der Lichtprojektor Material mit niedrigen thermischen Expansionskoeffizienten, insbesondere Zerodur, Suprasil, fused silica aufweisen. Es wird die Winkelkalibrierung des Musterprojektors als eine bekannte Größe vorausgesetzt. Wird der Musterprojektor aus einem LTE-Material, d. h. mit einem niedrigen thermischen Expansionskoeffizienten gefertigt, wie es beispielsweise Zerodur, Suprasil, fused silica usw. sind, so bleibt die Kalibrierung ebenso bei größeren Temperaturänderungen bestehen.

Gemäß einer weiteren vorteilhaften Ausgestaltung kann der Lichtprojektor, insbesondere mittels einer Absorptionszelle oder einer Referenzstation, optisch stabilisiert sein. Auf diese Weise kann die Wellenlänge des zur Projektion verwendeten Lichts möglichst konstant gehalten werden, was über eine optische Stabilisierung beispielsweise mittels einer Absorptionszelle oder Referenzstation bewirkt werden kann.

Gemäß einer weiteren vorteilhaften Ausgestaltung kann mittels einer Rechnereinrichtung und einer Vielzahl von Aufnahmen des Messgerätes die Güte der realen ebenen Wand oder realen ebenen Fläche mathematisch berechnet und deren Einfluss mathematisch korrigiert werden.

Weitere vorteilhafte Ausgestaltungen werden in Verbindung mit den Figuren näher beschrieben. Es zeigen:
- Figur 1: zeigt ein erstes Ausführungsbeispiel einer erfindungsgemäßen Vorrichtung;
- Figur 2: zeigt ein zweites Ausführungsbeispiel einer erfindungsgemäßen Vorrichtung;
- Figur 3: zeigt ein drittes Ausführungsbeispiel einer erfindungsgemäßen Vorrichtung;
- Figur 4: zeigt ein viertes Ausführungsbeispiel einer erfindungsgemäßen Vorrichtung;
- Figur 5: zeigt ein Ausführungsbeispiel eines erfindungsgemäßen Verfahrens.

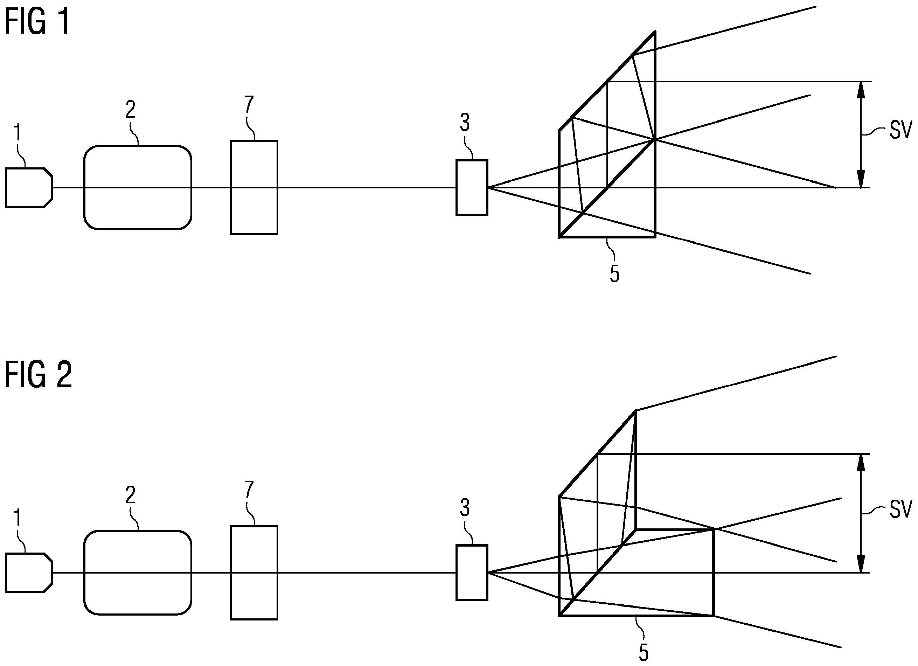

Figur 1 zeigt ein erstes Ausführungsbeispiel einer erfindungsgemäßen Vorrichtung. Figur 1 zeigt eine Vorrichtung zur Kalibrierung eines Messgerätes, das zur Vermessung eines Messobjektes verwendet wird. Dabei eignet sich eine erfindungsgemäße Vorrichtung insbesondere für Messobjekte, die sich im Raum im Bereich von 0 bis beispielsweise 6 m je Raumachse erstrecken. Das Messgerät hat einen das gesamte Messobjekt erfassenden Erfassungsbereich. Mittels eines Lichtprojektors können verschiedene Kalibriermuster Ni in den Erfassungsbereich des Messgerätes auf eine ebene Wand oder eine ebene Fläche projiziert werden. Dabei bezeichnet das Bezugszeichen 1 eine Lichtquelle, die insbesondere als ein Laser ausgebildet sein kann. Bezugszeichen 2 bezeichnet eine Kollimationsoptik, der sich ein Kohärenzminderer 7, insbesondere in Ausgestaltung einer speckle Unterdrückung, anschließen kann. Im weiteren Strahlenverlauf von der Lichtquelle 1 ist ein Mustergenerator 3 positioniert, der insbesondere als eine Musterplatte ausgebildet sein kann. Dem folgt im Strahlengang ein Polarisator oder Strahlenteiler 5, der mindestens zwei mit einem einem Maßverkörperung bereitstellenden Strahlversatz zueinander lateral räumlich verschobene Kalibriermuster M1 und M2 erzeugen kann. Dieser Strahlversatz ist eine laterale Maßverkörperung. Dieser Strahlversatz sollte sich möglichst genau zwischen zwei parallelen Strahlen ausbilden, die aus der Vorrichtung wieder austreten. Figur 1 stellt lediglich das Prinzip dar und berücksichtigt nicht die Laufwege des Lichtes im Strahlteiler 5 und dort ebenso keine Effekte in Folge einer Brechung des Lichts. Damit veranschaulicht Figur 1 das Konzept eines erfindungsgemäßen Kalibrierverfahrens. Bei der Vermessung großer Strukturen als Messobjekte stellt sich ebenso immer die Frage nach einer geeigneten Kalibrierung. Dazu gibt es herkömmlicherweise unterschiedliche Ansätze, die zu unterschiedlichen erreichbaren Genauigkeiten führen bzw. einen deutlich unterschiedlichen Aufwand erfordern. Herkömmliche Ausführungsbeispiele sind beispielsweise Kalibriertafeln. Nachteiligerweise werden die Kalibriertafeln bei Messfeldern > 0,5 m² groß, schwer und unhandlich und zudem bei größeren Genauigkeitsanforderungen ebenso teuer. Eine weitere herkömmliche Lösung stellt die Fotogrammmetrie dar. Dabei wird zur Kalibrierung des Systems eine Anzahl von Kalibriermarken am Messobjekt oder in dem Raum des Erfassungsbereiches angebracht und daran das System kalibriert. Nach der Kalibrierung werden die Kalibriermarken wieder eingesammelt. Sind die Kalibriermarken am Messobjekt angebracht, dann verdecken sie typischerweise ebenso Teile des Objektes, die bei der Messung dann nicht erfasst werden können.

Bei stereoskopischen Systemen mit zwei Kameras muss neben der Kalibrierung des Messvolumens für die Kameras aus der Erfassung der Disparität dann eine Tiefenkarte erstellt werden. Für die laterale Dimensionsbestimmung wird typischerweise ein Maßstab bzw. eine Maßverkörperung in mindestens einer Messung aus dem Kalibrierdatensatz mit aufgenommen. So kann im Prinzip das System in seinem Messvolumen kalibriert werden.

Figur 1 veranschaulicht das erfindungsgemäße Konzept des Kalibrierverfahrens, wobei ein Lichtmuster auf das Messobjekt zur Kalibrierung projiziert wird. Dies kann ebenso während der Messung und damit simultan zur Datenaufnahme ausgeführt werden.

Es ergeben sich mehrere verschiedenartige Lichtmuster als Ausführungsbeispiele für Lichtmuster. Muster können aus geometrischen Formen, beispielsweise Punkte, Kreise, Kreuze oder Linienstücke gebildet werden. Des Weiteren kann die Anordnung der geometrischen Formen mit einer Codierung des Ortes geschaffen sein. Beispielsweise kann dies über die Anordnung der Formen relativ zueinander ausgeführt werden, wobei die Codierung sich nach größeren Teilbereichen des Erfassungsbereichs wiederholen kann. Zur Einbringung eines Maßstabes kann das Lichtmuster verdoppelt werden und beide Lichtmuster können relativ zueinander verschoben sein, um über das doppelte Muster dann ebenso eine Skala mit zu projizieren. Dabei kann eine Verschiebung der beiden Muster entlang einer Achse ausgeführt werden, die zur Basislinie, die ebenso Epipolarlinie bezeichnet werden kann, der Triangulation geneigt ist und vorzugsweise in einer Ebene liegt, die senkrecht auf der optischen Achse des eingestrahlten Lichtes liegt. Eine Trennung der beiden Lichtmuster M1 und M2 kann mittels Polarisation oder mittels eines polarisationsneutralen Strahlenteilers 5 ausgeführt werden. Alternativ dazu können die beiden Lichtmuster mit zwei unterschiedlichen Lichtfarben bzw. Lichtwellenlängen erzeugt werden.

Figur 2 zeigt ein zweites Ausführungsbeispiel einer erfindungsgemäßen Vorrichtung. Im Unterschied zu Figur 1 berücksichtigt Figur 2 schematisch die Brechung auf den Lichtwegen im Strahlteiler 5.

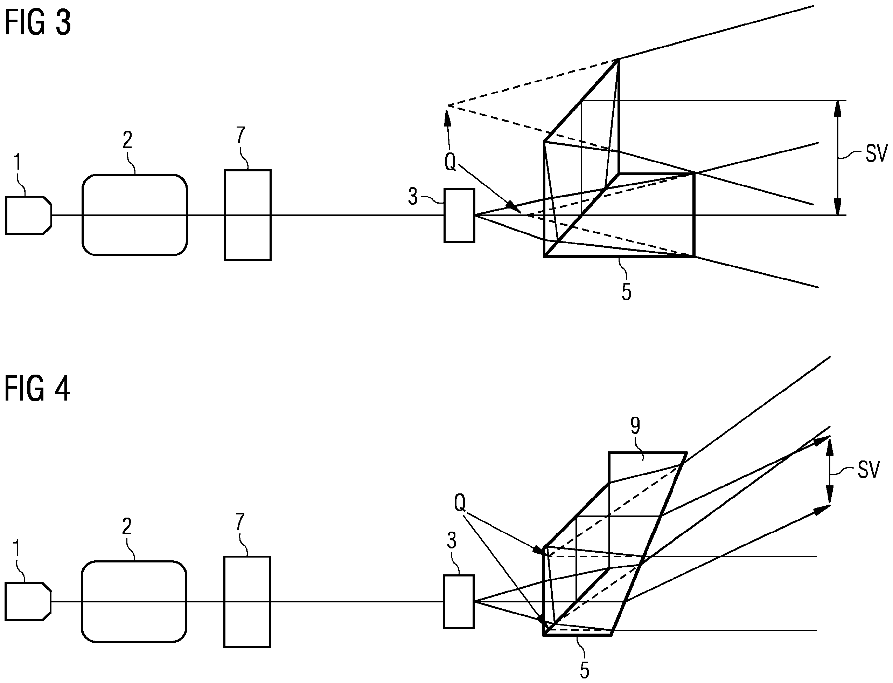

Figur 3 zeigt ein drittes Ausführungsbeispiel einer erfindungsgemäßen Vorrichtung. Im Unterschied zu Figur 1 berücksichtigt Figur 3 schematisch die Brechung auf den Lichtwegen im grauen Strahlteiler 5. Dabei stellt das Bezugszeichen Q einen effektiven Quellort des Musterprojektors bzw. der Vorrichtung dar.

Die gestrichelten Linien für die effektiven Quellorte Q der Vorrichtung zeigen, dass diese über die Strahlteiler 5 lateral versetzt sind und zudem über die Glaswege ebenso axial verschoben sind. Die axiale Verschiebung bewirkt, dass die beiden Muster M1 und M2 mit unterschiedlicher Größe auf der Wand aufgefangen werden. So haben entsprechende Punkte auf der Wand dann einen Versatz, der sich aus dem lateralen Versatz aufgrund der Strahlteilung und einem zusätzlichen Versatz aufgrund der axialen Verschiebung der Quellorte Q zusammensetzt. Der zusätzliche Versatz ist ortsabhängig im Muster und hängt vom Abstrahlwinkel des Mustergenerators 3 für das betreffende Element ab. Bei sich entsprechenden Elementen ist der Versatz konstant, aber zwischen den Elementen aufgrund des Abstrahlwinkels unterschiedlich.

Figur 4 zeigt ein viertes Ausführungsbeispiel einer erfindungsgemäßen Vorrichtung. In Figur 4 ist ebenso ein effektiver Quellort Q der Vorrichtung dargestellt. Zudem ist in Figur 4 ein Korrekturprisma 9 eingebracht. Figur 4 berücksichtigt schematisch die Brechung auf den Lichtwegen im grauen Strahlteiler 5. Entsprechend Figuren 1 bis 3, wird ebenso in Figur 4 ein Strahlversatz S4 erzeugt, der als ein lateraler Maßstab verwendbar ist.

Die gestrichelten Linien für die effektiven Quellorte Q der Vorrichtung bzw. des Musterprojektors zeigen, dass diese über den Strahlteiler 5 lateral versetzt sind und zudem über die Glaswege ebenso axial verschoben sind. Die axiale Verschiebung kann mittels eines Korrekturprismas 9 eingestellt werden und über einen ausgezeichneten bzw. bestimmten Prismenwinkel α symmetrisch auch vollständig abgeglichen werden. Dieser ausgezeichnete Winkel hängt ab von der Wellenlänge und dem Brechungsindex bzw. der Dispersion des verwendeten Glasmaterials.

Die Baugruppe des Teilers 5 besteht beispielsweise aus einem Dreiecksprisma und einem Rhomboeder, das ein Prisma mit Parallelogramm als Grundfläche ist, und einem Korrekturprisma. Der vorgeschlagene monolithische Aufbau ermöglicht maximale Stabilität, und zwar mechanisch sowie thermisch, und kann aus Quarzglas gefertigt sein. Zur weiteren Optimierung kann der Mustergenerator ebenso auf der Frontfläche des Strahlteilers 5 angeordnet sein. Optische Reflektionsverluste der Gruppe des Strahlteilers 5 können über nichtreflektierende Beschichtungen bzw. mittels Ansprengen der Fläche minimiert werden. In Folge der Verwendung des Korrekturprismas 9 haben gemäß Figur 4 die effektiven Quellorte Q im Unterschied zu Figur 3 eine in axialer Richtung vertauschte Position. Dies zeigt, dass ebenso eine vollständige Korrektur möglich ist. Damit zeigt Figur 4 ein Prinzipbild einer erfindungsgemäßen Vorrichtung in Ausgestaltung einer im Unterschied zu Figur 3 symmetrisierten Strahlachse.

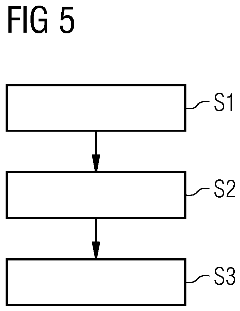

Figur 5 zeigt ein erstes Ausführungsbeispiel eines erfindungsgemäßen Verfahrens. Mit dem Verfahren wird ein Messgerät kalibriert, das Messobjekte vermessen soll, die sich im Bereich von Metern im Raum erstrecken. Dabei wird eine erfindungsgemäße Vorrichtung in einem ersten Schritt S1 in den Erfassungsbereich des Messgerätes dadurch eingebracht, dass die erfindungsgemäße Vorrichtung mittels eines Lichtprojektors ein erstes Muster M1 in den Erfassungsbereich des Messgerätes in Richtung auf eine ebene Wand oder ebene Fläche projiziert. In einem zweiten Schritt S2 erfolgt mittels eines Polarisators oder eines Strahlenteilers oder , in einem nicht beanspruchten Beispiel, durch Veränderung der Lichtwellenlänge der Lichtquelle eines weiteren Kalibriermusters M2, das mit einem Strahlversatz lateral räumlich zu dem ersten Kalibriermuster M1 verschoben ist. Der Strahlversatz stellt auf diese Weise einen Maßstab dar, mit dem Messgeräte miteinander verglichen werden können. Mit einem dritten Schritt S3 kann mittels einer Rechnereinrichtung ein Winkelfehler zwischen zueinander verschobenen Teilen der Kalibriermuster M1 und M2 mittels Triangulation bei der Kalibrierung berücksichtigt werden.

## Patentansprüche

1. Vorrichtung zur Kalibrierung eines Messgerätes zur Vermessung eines sich entlang eines Bereichs in Metern im Raum erstreckende Messobjektes, wobei das Messgerät einen das gesamte Messobjekt erfassenden Erfassungsbereich aufweist, wobei die Vorrichtung umfasst:
- eine Rechnereinrichtung;
- einen Lichtprojektor, welcher eingerichtet ist, um verschiedene Kalibriermuster (Mi) in den Erfassungsbereich des Messgerätes auf eine ebene Wand oder ebene Fläche zu projizieren; und
- das Messgerät, welches eingerichtet ist, die verschiedenen Kalibriermuster (Mi) aufzunehmen;
**dadurch gekennzeichnet, dass**
die Vorrichtung einen Polarisator oder einen Strahlenteiler (5) umfasst, wobei der Polarisator oder der Strahlenteiler (5) eingerichtet ist, um mindestens zwei mit einem eine Maßverkörperung bereitstellenden Strahlversatz (SV) zueinander lateral räumlich verschobene Kalibriermuster (M1, M2) zu erzeugen, wobei der Strahlversatz einem Abstand zwischen zwei parallelen Strahlen, die aus der Vorrichtung austreten, entspricht, und wobei die Vorrichtung eingerichtet ist, den Strahlversatz (SV) als Basisabstand zur Kalibrierung der lateralen Dimensionen des Messgeräts zu nutzen.

2. Vorrichtung gemäß Anspruch 1,
**dadurch gekennzeichnet, dass**
der Lichtprojektor eine Lichtquelle (1), eine Kollimationsoptik (2) und einen Mustergenerator (3) aufweist.

3. Vorrichtung gemäß Anspruch 2,
**dadurch gekennzeichnet, dass**
die Musterplatte als eine Transmissionsstruktur, als refraktive, diffraktive oder reflektierende Struktur oder als ein computergeneriertes Hologramm ausgebildet ist.

4. Vorrichtung gemäß Anspruch 2 oder gemäß den Ansprüchen 2 und 3,
**dadurch gekennzeichnet, dass**
der Lichtprojektor eine kohärente oder teilkohärente Lichtquelle (1) aufweist, wobei zwischen dem Mustergenerator (3) und der im Strahlengang nach der Lichtquelle (1) angeordneten Kollimationsoptik (2) ein Kohärenzminderer (7) positioniert ist.

5. Vorrichtung gemäß dem vorhergehenden Anspruch 4,
**dadurch gekennzeichnet, dass**
der Kohärenzminderer (7) aus doppelbrechenden planparallelen Platten besteht.

6. Vorrichtung gemäß dem vorhergehenden Anspruch 5,
**dadurch gekennzeichnet, dass**
eine Mehrzahl von Platten im Strahlengang hintereinander angeordnet ist, wobei Hauptachsen einer jeweiligen Platte zu den Hauptachsen der vorangehenden Platte um einen Winkel verdreht sind.

7. Vorrichtung gemäß einem der vorhergehenden Ansprüche,
**dadurch gekennzeichnet, dass**
ein jeweiliges Kalibriermuster (M) geometrische Formen aufweist.

8. Vorrichtung gemäß Anspruch 7,
**dadurch gekennzeichnet, dass**
die geometrischen Formen ortscodiert sind.

9. Vorrichtung gemäß Anspruch 7 oder 8,
**dadurch gekennzeichnet, dass**
die geometrischen Formen eine vorbestimmte Winkelgröße aufweisen.

10. Vorrichtung gemäß einem der vorhergehenden Ansprüche,
**dadurch gekennzeichnet, dass**
die Rechnereinrichtung eingerichtet ist, um einen Winkelfehler zwischen zueinander verschobenen Teilen der Kalibriermuster (M1, M2) mittels Triangulation bei der Kalibrierung zu berücksichtigen.

11. Vorrichtung gemäß einem der vorhergehenden Ansprüche,
**dadurch gekennzeichnet, dass**
die gesamte Vorrichtung oder Bestandteile der Vorrichtung und der Raum, der Erfassungsbereich oder die ebene Wand oder ebene Fläche relativ zueinander verfahrbar ist.

12. Vorrichtung gemäß einem der vorhergehenden Ansprüche,
**dadurch gekennzeichnet, dass**
der Lichtprojektor Material mit niedrigem thermischen Expansionskoeffizienten aufweist.

13. Vorrichtung gemäß einem der vorhergehenden Ansprüche,
**dadurch gekennzeichnet, dass**
der Lichtprojektor optisch stabilisiert ist.

14. Vorrichtung gemäß einem der vorhergehenden Ansprüche,
**dadurch gekennzeichnet, dass**
die Rechnereinrichtung dazu eingerichtet ist, mittels einer Vielzahl von Aufnahmen des Messgerätes die Güte der realen ebenen Wand oder realen ebenen Fläche mathematisch zu berechnen und deren Einfluss mathematisch zu korrigieren.

15. Verfahren zur Kalibrierung eines Messgerätes zur Vermessung eines sich entlang eines Bereichs in Metern im Raum erstreckenden Messobjektes, wobei das Messgerät einen das gesamte Messobjekt erfassenden Erfassungsbereich aufweist, wobei zur Kalibrierung eine Vorrichtung verwendet wird, welche umfasst:
- eine Rechnereinrichtung;
- einen Lichtprojektor, mittels welchem verschiedene Kalibriermuster (Mi) in den Erfassungsbereich des Messgerätes auf eine ebene Wand oder ebene Fläche projiziert werden (S1); und
- das Messgerät, welches die verschiedenen Kalibriermuster (Mi) aufnimmt;
**dadurch gekennzeichnet, dass**
die Vorrichtung einen Polarisator oder einen Strahlenteiler (5) umfasst, wobei mittels des Polarisators oder mittels des Strahlenteilers (5) um mindestens zwei mit einem eine Maßverkörperung bereitstellenden Strahlversatz (SV) zueinander lateral räumlich verschobene Kalibriermuster (M1, M2) erzeugt werden, wobei der Strahlversatz einem Abstand zwischen zwei parallelen Strahlen, die aus der Vorrichtung austreten, entspricht, und wobei die Vorrichtung den Strahlversatz (SV) als Basisabstand zur Kalibrierung der lateralen Dimensionen des Messgeräts nutzt.

16. Verfahren gemäß Anspruch 15,
**dadurch gekennzeichnet, dass**
der Lichtprojektor eine Lichtquelle (1), eine Kollimationsoptik (2) und einen Mustergenerator (3), aufweist.

17. Verfahren gemäß Anspruch 16,
**dadurch gekennzeichnet, dass**
die Musterplatte als eine Transmissionsstruktur, als refraktive, diffraktive oder reflektierende Struktur oder als ein computergeneriertes Hologramm ausgebildet ist.

18. Verfahren gemäß einem der vorhergehenden Ansprüche 15 bis 17,
**dadurch gekennzeichnet, dass**
der Lichtprojektor eine kohärente oder teilkohärente Lichtquelle (1) aufweist, wobei zwischen dem Mustergenerator (3) und der im Strahlengang nach der Lichtquelle (1) angeordneten Kollimationsoptik (2) ein Kohärenzminderer (7) positioniert ist.

19. Verfahren gemäß dem vorhergehenden Anspruch 18,
**dadurch gekennzeichnet, dass**
der Kohärenzminderer (7) aus doppelbrechenden planparallelen Platten besteht.

20. Verfahren gemäß dem vorhergehenden Anspruch 19,
**dadurch gekennzeichnet, dass**
eine Mehrzahl von Platten im Strahlengang hintereinander angeordnet ist, wobei Hauptachsen einer jeweiligen Platte zu den Hauptachsen der vorangehenden Platte um einen Winkel verdreht sind.

21. Verfahren gemäß einem der vorhergehenden Ansprüche 15 bis 20,
**dadurch gekennzeichnet, dass**
ein jeweiliges Kalibriermuster (M) geometrische Formen aufweist.

22. Verfahren gemäß Anspruch 21,
**dadurch gekennzeichnet, dass**
die geometrischen Formen ortscodiert sind.

23. Verfahren gemäß Anspruch 21 oder 22,
**dadurch gekennzeichnet, dass**
die geometrischen Formen eine vorbestimmte Winkelgröße aufweisen.

24. Verfahren gemäß einem der vorhergehenden Ansprüche 15 bis 23,
**dadurch gekennzeichnet, dass**
mittels einer Rechnereinrichtung ein Winkelfehler zwischen zueinander verschobenen Teilen der Kalibriermuster (M1, M2) mittels Triangulation bei der Kalibrierung berücksichtigt wird (S3).

25. Verfahren gemäß einem der vorhergehenden Ansprüche 15 bis 24,
**dadurch gekennzeichnet, dass**
die gesamte Vorrichtung oder Bestandteile der Vorrichtung und der Raum, der Erfassungsbereich oder die ebene Wand oder ebene Fläche relativ zueinander verfahrbar ist.

26. Verfahren gemäß einem der vorhergehenden Ansprüche 15 bis 25,
**dadurch gekennzeichnet, dass**
der Lichtprojektor Material mit niedrigem thermischen Expansionskoeffizienten aufweist.

27. Verfahren gemäß einem der vorhergehenden Ansprüche 15 bis 26,
**dadurch gekennzeichnet, dass**
der Lichtprojektor optisch stabilisiert ist.

28. Verfahren gemäß einem der vorhergehenden Ansprüche 15 bis 27,
**dadurch gekennzeichnet, dass**
mittels einer Rechnereinrichtung und einer Vielzahl von Aufnahmen des Messgerätes die Güte der realen ebenen Wand oder realen ebenen Fläche mathematisch berechnet und deren Einfluss mathematisch korrigiert wird.

## Claims

1. Device for calibrating a measuring apparatus for measuring a measurement object extending along a region in meters in space, the measuring apparatus having a recording region which records the entire measurement object, the device comprising:
- a computer instrument;
- a light projector configured to project different calibration patterns (Mi) into the recording region of the measuring apparatus on a planar wall or planar surface; and
- the measuring apparatus configured to record the different calibration patterns (Mi);
**characterized in that**
the device comprises a polarizer or a beam splitter (5), the polarizer or the beam splitter (5) being configured to produce at least two calibration patterns (M1, M2) laterally spatially displaced with respect to one another by a beam offset (SV) providing a measurement reference, the beam offset corresponding to a distance between two parallel beams that emerge from the device, and the device being configured to use the beam offset (SV) as a base distance for calibrating the lateral dimensions of the measuring apparatus.

2. Device according to Claim 1,
**characterized in that**
the light projector comprises a light source (1), collimation optics (2) and a pattern generator (3).

3. Device according to Claim 2,
**characterized in that**
the pattern plate is configured as a transmission structure, as a refractive, diffractive or reflective structure, or as a computer-generated hologram.

4. Device according to Claim 2 or according to Claims 2 and 3,
**characterized in that**
the light projector comprises a coherent or semicoherent light source (1), a coherence reducer (7) being positioned between the pattern generator (3) and collimation optics (2) arranged downstream of the light source (1) in the beam path.

5. Device according to the preceding Claim 4,
**characterized in that**
the coherence reducer (7) consists of birefringent planeparallel plates.

6. Device according to the preceding Claim 5,
**characterized in that**
a multiplicity of plates are arranged successively in the beam path, principal axes of a respective plate being rotated with respect to the principal axes of the preceding plate by an angle.

7. Device according to any one of the preceding claims,
**characterized in that**
a respective calibration pattern (M) comprises geometrical shapes.

8. Device according to Claim 7,
**characterized in that**
the geometrical shapes are position-encoded.

9. Device according to Claim 7 or 8,
**characterized in that**
the geometrical shapes have a predetermined angular size.

10. Device according to any one of the preceding claims,
**characterized in that**
the computer instrument is configured to take into account an angular error between mutually displaced parts by means of triangulation during the calibration.

11. Device according to any one of the preceding claims,
**characterized in that**
the entire apparatus or constituent parts of the apparatus and the space, the recording region or the planar wall or planar surface are movable relative to one another.

12. Device according to any one of the preceding claims,
**characterized in that**
the light projector consists of material with a low thermal expansion coefficient.

13. Device according to any one of the preceding claims,
**characterized in that**
the light projector is optically stabilized.

14. Device according to any one of the preceding claims,
**characterized in that**
the computer instrument is configured by means of a plurality of recordings of the measuring apparatus to mathematically calculate the quality of the real planar wall or real planar surface and mathematically correct the effect of this quality.

15. Method for calibrating a measuring apparatus for measuring a measurement object extending along a region in meters in space, the measuring apparatus having a recording region which records the entire measurement object, a device being used for calibration purposes, the device comprising:
- a computer instrument;
- a light projector by means of which different calibration patterns (Mi) are projected into the recording region of the measuring apparatus on a planar wall or planar surface (S1); and
- the measuring apparatus which records the different calibration patterns (Mi);
**characterized in that**
the device comprises a polarizer or a beam splitter (5), the polarizer or the beam splitter (5) being used to produce at least two calibration patterns (M1, M2) laterally spatially displaced with respect to one another by a beam offset (SV) providing a measurement reference, the beam offset corresponding to a distance between two parallel beams that emerge from the device, and the device using the beam offset (SV) as a base distance for calibrating the lateral dimensions of the measuring apparatus.

16. Method according to Claim 15,
**characterized in that**
the light projector comprises a light source (1), collimation optics (2) and a pattern generator (3).

17. Method according to Claim 16,
**characterized in that**
the pattern plate is configured a transmission structure, as a refractive, diffractive or reflective structure, or as a computer-generated hologram.

18. Method according to any one of the preceding Claims 15 to 17,
**characterized in that**
the light projector comprises a coherent or semicoherent light source (1), a coherence reducer (7) being positioned between the pattern generator (3) and collimation optics (2) arranged downstream of the light source (1) in the beam path.

19. Method according to the preceding Claim 18,
**characterized in that**
the coherence reducer (7) consists of birefringent planeparallel plates.

20. Method according to the preceding Claim 19,
**characterized in that**
a multiplicity of plates are arranged successively in the beam path, principal axes of a respective plate being rotated with respect to the principal axes of the preceding plate by an angle.

21. Method according to any one of the preceding Claims 15 to 20,
**characterized in that**
a respective calibration pattern (M) comprises geometrical shapes.

22. Method according to Claim 21,
**characterized in that**
the geometrical shapes are position-encoded.

23. Method according to Claim 21 or 22,
**characterized in that**
the geometrical shapes have a predetermined angular size.

24. Method according to any one of the preceding Claims 15 to 23,
**characterized in that**
by means of a computer instrument, an angular error between mutually displaced parts of the calibration patterns (M1, M2) is taken into account by means of triangulation during the calibration (S3).

25. Method according to any one of the preceding Claims 15 to 24,
**characterized in that**
the entire apparatus or constituent parts of the apparatus and the space, the recording region or the planar wall or planar surface are movable relative to one another.

26. Method according to any one of the preceding Claims 15 to 25,
**characterized in that**
the light projector consists of material with a low thermal expansion coefficient.

27. Method according to any one of the preceding Claims 15 to 26,
**characterized in that**
the light projector is optically stabilized.

28. Method according to any one of the preceding Claims 15 to 27,
**characterized in that**
by means of a computer instrument and a plurality of recordings of the measuring apparatus, the quality of the real planar wall or real planar surface is mathematically calculated and the effect of this quality is mathematically corrected.

## Revendications

1. Installation d'étalonnage d'un appareil de mesure pour la mesure d'un objet à mesurer s'étendant dans le local, le long d'une partie en mètres, l'appareil de mesure ayant une partie de détection détectant l'objet à mesurer dans son ensemble, dans lequel l'installation comprend :
- un dispositif informatique ;
- un projecteur de lumière, qui est conçu pour projeter divers motifs (Mi) d'étalonnage dans la partie de détection de l'appareil de mesure sur une paroi plane ou une surface plane ; et
- l'appareil de mesure, qui est conçu pour enregistrer les divers motifs (Mi) d'étalonnage ;
**caractérisée en ce que**
l'installation comprend un polariseur ou un diviseur (5) de faisceau, dans laquelle le polariseur ou le diviseur (5) de faisceau est conçu pour produire au moins deux motifs (M1, M2) d'étalonnage décalés dans l'espace latéralement les uns par rapport aux autres d'un décalage (SV) de rayon procurant une incarnation de mesure, dans laquelle le décalage de rayon correspond à une distance entre deux rayons parallèles, qui sortent de l'installation, et dans laquelle l'installation est conçue pour utiliser le décalage (SV) de rayon comme distance de base pour l'étalonnage des dimensions latérales de l'appareil de mesure.

2. Installation suivant la revendication 1,
**caractérisée en ce que**
le projecteur de lumière a une source (1) lumineuse, une optique (2) de collimation et un générateur (3) de motif.

3. Installation suivant la revendication 2,
**caractérisée en ce que**
la plaque de motifs est constituée sous la forme d'une structure de transmission, d'une structure de réfraction, d'une structure de diffraction ou d'une structure de réflexion ou sous la forme d'un hologramme produit par ordinateur.

4. Installation suivant la revendication 2 ou suivant les revendications 2 et 3,
**caractérisée en ce que**
le projecteur de lumière a une source (1) lumineuse cohérente ou partiellement cohérente, dans laquelle un atténuateur (7) de cohérence est mis en position entre le générateur (3) de motif et l'optique (2) de collimation, montée dans le trajet des rayons après la source (1) lumineuse.

5. Installation suivant la revendication 4 précédente,
**caractérisée en ce que**
l'atténuateur (7) de cohérence est constitué d'une lame à faces parallèles biréfringente.

6. Installation suivant la revendication 5 précédente,
**caractérisée en ce que**
une pluralité de lames sont montées les unes derrière les autres dans le trajet des rayons, des axes principaux d'une lame respective étant tournés d'un certain angle par rapport aux axes principaux des lames précédentes.

7. Installation suivant l'une des revendications précédentes,
**caractérisée en ce que**
un motif (M) respectif d'étalonnage a des formes géométriques.

8. Installation suivant la revendication 7,
**caractérisée en ce que**
les formes géométriques sont codées en emplacement.

9. Installation suivant la revendication 7 ou 8,
**caractérisée en ce que**
les formes géométriques ont une dimension angulaire définie à l'avance.

10. Installation suivant l'une des revendications précédentes,
**caractérisée en ce que**
le dispositif informatique est conçu pour tenir compte, au moyen d'une triangulation lors de l'étalonnage, d'une erreur angulaire entre des parties, décalées les unes par rapport aux autres, des motifs (M1, M2) d'étalonnage.

11. Installation suivant l'une des revendications précédentes,
**caractérisée en ce que**
toute l'installation ou des parties constitutives de l'installation et le local, la partie de détection ou la paroi plane ou la surface plane peuvent être déplacés l'un par rapport à l'autre.

12. Installation suivant l'une des revendications précédentes,
**caractérisée en ce que**
le projecteur de lumière a du matériau ayant un petit coefficient de dilatation thermique.

13. Installation suivant l'une des revendications précédentes,
**caractérisée en ce que**
le projecteur de lumière est stabilisé optiquement.

14. Installation suivant l'une des revendications précédentes,
**caractérisée en ce que**
le dispositif informatique est conçu pour calculer mathématiquement au moyen d'une pluralité d'enregistrements de l'appareil de mesure, la qualité de la paroi plane réelle ou de la surface plane réelle et pour en corriger mathématiquement l'influence.

15. Procédé d'étalonnage d'un appareil de mesure pour la mesure d'un objet à mesurer s'étendant dans l'espace le long d'une partie en mètres, dans lequel l'appareil de mesure a une partie de détection détectant l'objet à mesurer dans son ensemble, dans lequel pour l'étalonnage on utilise une installation, qui comprend :
- un dispositif informatique ;
- un projecteur de lumière, au moyen duquel on projette divers motifs (Mi) d'étalonnage dans la partie de détection de l'appareil de mesure sur une paroi plane ou une surface plane (S1); et
- l'appareil de mesure, qui enregistre les divers motifs (Mi) d'étalonnage ;
**caractérisé en ce que**
l'installation comprend un polariseur ou un diviseur (5) de faisceau, dans lequel, au moyen du polariseur ou au moyen du diviseur (5) de faisceau, on produit des motifs (M1, M2) d'étalonnage décalés dans l'espace latéralement les uns par rapport aux autres d'un décalage (SV) de rayon procurant une incarnation de mesure, dans lequel le décalage de rayon correspond à une distance entre deux rayons parallèles, qui sortent de l'installation, et dans lequel l'installation utilise le décalage (SV) de rayon comme distance de base pour l'étalonnage des dimensions latérales de l'appareil de mesure.

16. Procédé suivant la revendication 15,
**caractérisé en ce que**
le projecteur de lumière a une source (1) lumineuse, une optique (2) de collimation et un générateur (3) de motif.

17. Procédé suivant la revendication 16,
**caractérisé en ce que**
la plaque de motifs est constituée sous la forme d'une structure de transmission, d'une structure de réfraction, d'une structure de diffraction ou d'une structure de réflexion ou sous la forme d'un hologramme produit par ordinateur.

18. Procédé suivant l'une des revendications 15 à 17 précédentes,
**caractérisé en ce que**
le projecteur de lumière a une source (1) lumineuse cohérente ou partiellement cohérente, dans lequel un atténuateur (7) de cohérence est mis en position entre le générateur (3) de motif et l'optique (2) de collimation, montée dans le trajet des rayons après la source (1) lumineuse.

19. Procédé suivant la revendication 18 précédente,
**caractérisé en ce que**
l'atténuateur (7) de cohérence est constitué d'une lame à faces parallèles biréfringente.

20. Procédé suivant la revendication 19 précédente,
**caractérisé en ce que**
une pluralité de lames sont montées les unes derrière les autres dans le trajet des rayons, des axes principaux d'une lame respective étant tournés d'un certain angle par rapport aux axes principaux des lames précédentes.

21. Procédé suivant l'une des revendications 15 à 20 précédentes,
**caractérisé en ce que**
un motif (M) respectif d'étalonnage a des formes géométriques.

22. Procédé suivant la revendication 21,
**caractérisé en ce que**
les formes géométriques sont codées en emplacement.

23. Procédé suivant la revendication 21 ou 22,
**caractérisé en ce que**
les formes géométriques ont une dimension angulaire définie à l'avance.

24. Procédé suivant l'une des revendications 15 à 23 précédentes,
**caractérisé en ce que**
au moyen d'un dispositif informatique, on tient compte (S3), au moyen d'une triangulation lors de l'étalonnage, d'une erreur angulaire entre des parties décalées les unes par rapport aux autres des motifs (M1, M2) d'étalonnage.

25. Procédé suivant l'une des revendications 15 à 24 précédentes,
**caractérisé en ce que**
toute l'installation ou des parties constitutives de l'installation et le local, la partie de détection ou la paroi plane ou la surface plane, peuvent être déplacés l'un par rapport à l'autre.

26. Procédé suivant l'une des revendications 15 à 25 précédentes,
**caractérisé en ce que**
le projecteur de lumière a du matériau ayant un petit coefficient de dilatation thermique.

27. Procédé suivant l'une des revendications 15 à 26 précédentes,
**caractérisé en ce que**
le projecteur de lumière est stabilisé optiquement.

28. Procédé suivant l'une des revendications 15 à 27 précédentes,
**caractérisé en ce que**
au moyen d'un dispositif informatique et d'une pluralité d'enregistrements de l'appareil de mesure, on calcule mathématiquement la qualité de la paroi plane réelle ou de la surface plane réelle et on en corrige mathématiquement l'influence.
